# EUROPEAN PATENT APPLICATION

(11) **EP 3 683 624 A1**
(43) Date of publication of application: **22.07.2020**
(21) Application number: 19211626.7
(22) Date of filing: 31.07.2014
(51) Int. Cl.: G03B 17/02, G03B 5/00, G02B 7/08, H04N 5/232

(54) **LENS CONTROL APPARATUS, IMAGING APPARATUS, INFORMATION PROCESSING APPARATUS, IMAGING SYSTEM, METHOD, AND COMPUTER-READABLE STORAGE MEDIUM**

(30) Priority: 17.09.2013 US 201361878986 P; 10.04.2014 US 201414249689
(62) Divisional of application: 14845578.5
(71) Applicant: SONY Corporation, Tokyo 108-0075 (JP)
(72) Inventor: ITO, Ryogo, Minato-ku, Tokyo 108-0075 (JP); AKAMATSU, Kazuma, Minato-ku, Tokyo 108-0075 (JP); TAKAGI, Megumi, Minato-ku, Tokyo 108-0075 (JP); KATSUMATA, Shunsuke, Minato-ku, Tokyo 108-0075 (JP)
(74) Representative: D Young & Co LLP

(57) **Abstract**

Method and apparatus for remotely outputting a zoom control signal to an imaging device, wherein the zoom position change speed is slower compared to a normal zoom mode of the imaging device.

## Description

### Technical Field

The present technology relates to a lens control apparatus, an imaging apparatus, an information processing apparatus, an imaging system, a method, and a computer-readable storage medium, with which a zoom behavior with good operability can be performed.

### Background Art

From the past, an imaging apparatus has been configured such that a zoom lens is moved in accordance with an operation of a zoom lever or zoom key so as to set an angle of view. For example, in Patent Document 1, a zoom lens is electrically moved in accordance with the movement of a zoom lever to achieve manual zooming. Further, a configuration is provided in which when the movement of the zoom lens is controlled by a press of a zoom key, a zoom lever is electrically moved in conjunction with the movement of the zoom lens, and an angle of view can be roughly set at a position of the zoom lever without watching a screen.

Further, an imaging system is also proposed in which wireless communication is performed between an imaging apparatus and an external apparatus, e.g., an information processing apparatus, an application having a function capable of remote control of the imaging apparatus is run in the information processing apparatus, so that the imaging apparatus can be operated from the information processing apparatus.

Patent Document 1: Japanese Patent Application Laid-open No. Hei 10-191141

### Summary of Invention

### Problem to be solved by the Invention

Incidentally, in the imaging system in which an operation of the imaging apparatus is performed from the external apparatus through communication, a difference between a case where the imaging apparatus is operated with an operation switch or the like provided to the imaging apparatus and a case where the imaging apparatus is operated in the information processing apparatus has not been taken into consideration.

In the case where the imaging apparatus is operated in the information processing apparatus, in the information processing apparatus, for example, processing of detecting a zoom operation start and transmitting a zoom behavior start instruction to the imaging apparatus or processing of detecting a zoom operation end and transmitting a zoom behavior end instruction to the imaging apparatus is required. Further, in the imaging apparatus, it is necessary to receive the zoom behavior start instruction or the zoom behavior end instruction and perform zoom behavior control on the basis of the received instruction. In contrast to this, in the case where an operation switch or the like provided to the imaging apparatus is operated, in the imaging apparatus, a zoom behavior control only needs to be performed in response to an operation of the operation switch or the like. Thus, in the case where the imaging apparatus is operated in the information processing apparatus, time required for processing is longer as compared with a case where the operation switch or the like provided to the imaging apparatus is operated, and this deteriorates responsiveness of zoom stop, for example. In such a way, when the responsiveness of zoom stop is deteriorated, a displacement between a zoom position when a user stops a zoom operation and an actual zoom position (zoom stop position) is increased. Therefore, in the case where a zoom operation of the imaging apparatus is performed in the information processing apparatus, for example, in order to move the zoom position to a desired position, it is necessary to perform an operation in which the deterioration of responsiveness is taken into consideration, and there is a possibility to reduce operability.

In this regard, it is an object of the present technology to provide a lens control apparatus, an imaging apparatus, an information processing apparatus, an imaging system, a method, and a program that are capable of performing a zoom behavior with good operability even when a zoom operation is performed in any of an imaging apparatus and an external apparatus.

### Means for solving the Problem

According to a first aspect of the present technology, there is provided a lens control apparatus including: an operation input unit that receives a user operation; a communication unit that performs communication with an external apparatus; and a control unit that performs drive control of a zoom lens in accordance with a zoom operation received at the operation input unit or a zoom control signal received at the communication unit and sets a different zoom position change speed between drive control corresponding to the zoom operation and drive control corresponding to the zoom control signal.

In the lens control apparatus of the present technology, the drive control of the zoom lens is performed in accordance with the zoom operation received at the operation input unit or the zoom control signal received by wireless communication with an external apparatus via the communication unit, and a zoom position change speed in the drive control corresponding to the zoom control signal is set to be slower than in the drive control corresponding to the zoom operation, for example. Further, in the drive control corresponding to the zoom control signal, the zoom drive control of the zoom lens can be started at a speed slower than the drive control corresponding to the zoom operation, and then the zoom position change speed can be switched to a zoom position change speed in the zoom drive control corresponding to the zoom operation. Further, in the case where the zoom control signal indicates that a zoom operation shorter than a predetermined period is performed in the external apparatus, the drive control is performed only for a preset period. Further, in the case where the zoom control signal indicates a target zoom position, a zoom position of the zoom lens is changed to a target zoom position indicated by the zoom control signal, and in the case where a zoom position change speed is indicated by the zoom control signal, a zoom position of the zoom lens is changed at a zoom position change speed indicated by the zoom control signal. Additionally, information indicating a zoom position of the zoom lens is transmitted to the external apparatus.

According to a second aspect of the present technology, there is provided a lens control method including the steps of: performing, by a communication unit, communication with an external apparatus; and performing, by a control unit, drive control of a zoom lens in accordance with a zoom operation received at an operation input unit or a zoom control signal received at the communication unit and setting a different zoom position change speed between drive control corresponding to the zoom operation and drive control corresponding to the zoom control signal.

According to a third aspect of the present technology, there is provided a computer-readable storage medium storing a program causing a computer performing drive control of a zoom lens to execute: a procedure of performing communication with an external apparatus via a communication unit; and a procedure of performing the drive control of the zoom lens in accordance with a zoom operation received at an operation input unit or a zoom control signal received from the external apparatus via the communication unit and setting a different zoom position change speed between drive control corresponding to the zoom operation and drive control corresponding to the zoom control signal.

According to a fourth aspect of the present technology, there is provided an imaging apparatus including: an imaging optical system that includes a zoom lens; an operation input unit that receives a user operation; a communication unit that performs communication with an external apparatus; and a control unit that performs drive control of the zoom lens in accordance with a zoom operation in the operation input unit or a zoom control signal received at the communication unit and sets a different zoom position change speed between drive control corresponding to the zoom operation and drive control corresponding to the zoom control signal.

According to a fifth aspect of the present technology, there is provided an information processing apparatus including: a communication unit that performs communication with an imaging apparatus; an operation input unit that receives a user operation; and a control unit that generates a zoom control signal for controlling a zoom behavior in the imaging apparatus in accordance with at least any of an operation position of a zoom operation in the operation input unit, an operation period, and a movement amount of the operation position and outputs the zoom control signal to the imaging apparatus via the communication unit.

In the information processing apparatus of the present technology, a captured image is acquired from the imaging apparatus by wireless communication and displayed on a display unit, for example. Further, in accordance with an operation position of a user operation in the operation input unit or a movement amount of the operation position, a zoom control signal for controlling the zoom behavior in the imaging apparatus is generated and output to the imaging apparatus via the communication unit. For example, a zoom position change period of the zoom behavior in the imaging apparatus is set in accordance with the movement amount of the operation position in a pinch operation. Further, a target zoom position of a zoom behavior in the imaging apparatus is determined from the zoom position of the zoom lens acquired from the imaging apparatus and the movement amount of the operation position in the pinch operation. Further, a zoom position change speed of the zoom behavior in the imaging apparatus is determined in accordance with a moving speed of the operation position in the pinch operation.

According to a sixth aspect of the present technology, there is provided an information processing method including the steps of: performing, by a communication unit, communication with an imaging apparatus; and generating, by a control unit, a zoom control signal for controlling a zoom behavior in the imaging apparatus in accordance with at least any of an operation position of a zoom operation received at an operation input unit, an operation period, and a movement amount of the operation position and outputting the zoom control signal to the imaging apparatus via the communication unit.

According to a seventh aspect of the present technology, there is provided a computer-readable storage medium storing a program causing a computer performing drive control of a zoom lens provided to an imaging apparatus to execute: a procedure of performing communication with the imaging apparatus via a communication unit; and a procedure of generating a zoom control signal for controlling a zoom behavior in the imaging apparatus in accordance with a zoom operation received at an operation input unit and outputting the zoom control signal to the imaging apparatus via the communication unit, the program setting a different zoom position change speed between drive control of a zoom behavior corresponding to a zoom operation by an operation input unit of the imaging apparatus and drive control of a zoom behavior corresponding to the zoom control signal.

According to an eighth aspect of the present technology, there is provided an imaging system including: an imaging apparatus; and an information processing apparatus, the imaging apparatus including an imaging optical system that includes a zoom lens, an operation input unit that receives a user operation, a communication unit that performs communication with the information processing apparatus, and a control unit that performs drive control of the zoom lens in accordance with a zoom operation in the operation input unit or a zoom control signal received at the communication unit, the information processing apparatus including a communication unit that performs communication with the imaging apparatus, an operation input unit that receives a user operation, and a control unit that generates a zoom control signal for controlling a zoom behavior in the imaging apparatus in accordance with a zoom operation in the operation input unit and outputs the zoom control signal to the imaging apparatus via the communication unit, a different zoom position change speed being set between drive control corresponding to the zoom operation in the control unit of the imaging apparatus and drive control corresponding to the zoom control signal.

It should be noted that a program of the present technology is, for example, a program that can be provided to a general-purpose computer capable of executing various programs and codes by a memory medium provided in a computer-readable form, a communication medium, a memory medium such as an optical disc, a magnetic disc, or a semiconductor memory, or by a communication medium such as a network. When such a program is provided in the computer-readable form, processing corresponding to the program is achieved on the computer.

### Effects of the Invention

According to the present technology, the drive control of the zoom lens is performed in accordance with the zoom operation received at the operation input unit or the zoom control signal received at the communication unit, and a different speed is set for a zoom position change speed between the drive control corresponding to the zoom operation and the drive control corresponding to the zoom control signal. Thus, the zoom position change speed is switched between a speed adequate to the zoom operation received at the operation input unit and a speed adequate to the zoom control signal, i.e., the zoom operation performed in the external apparatus. Therefore, even when the zoom operation is performed in any of the imaging apparatus and the external apparatus, a zoom behavior with good operability can be performed. It should be noted that the effects described herein are merely exemplary ones and are not restrictive ones, and additional effects may be produced.

### Brief Description of Drawings

[Fig. 1] Fig. 1 is a diagram exemplifying an outer appearance (rear side) of an imaging system.
[Fig. 2] Fig. 2 is a diagram exemplifying an outer appearance (front side) of the imaging system.
[Fig. 3] Fig. 3 is a diagram exemplifying a case where an imaging apparatus and an information processing apparatus are integrated using an adaptor.
[Fig. 4] Fig. 4 is a block diagram exemplifying a functional configuration of the imaging apparatus.
[Fig. 5] Fig. 5 is a block diagram exemplifying a functional configuration of the information processing apparatus (for example, smartphone).
[Fig. 6] Fig. 6 is a sequence diagram showing behavior processing to the start of a linkage function between the imaging apparatus and the information processing apparatus.
[Fig. 7] Fig. 7 is a flowchart showing a behavior of the imaging apparatus.
[Fig. 8] Fig. 8 is a diagram exemplifying change characteristics of a zoom position.
[Fig. 9] Fig. 9 is a flowchart showing zoom position notification processing.
[Fig. 10] Fig. 10 is a flowchart showing a behavior of the information processing apparatus.
[Fig. 11] Fig. 11 is a flowchart showing zoom position display processing.
[Fig. 12] Fig. 12 is a diagram exemplifying a display screen of a display unit in the information processing apparatus.
[Fig. 13] Fig. 13 is a diagram exemplifying change characteristics of a zoom position of another behavior.
[Fig. 14] Fig. 14 is a flowchart showing a behavior of a case where zoom drive control is performed in accordance with an operation time of a pinch operation.
[Fig. 15] Fig. 15 is a flowchart showing a behavior of a case where zoom drive control is performed in accordance with a movement amount of the pinch operation.
[Fig. 16] Fig. 16 is a flowchart showing a zoom behavior instruction.
[Fig. 17] Fig. 17 is a flowchart showing a behavior in the case where zoom drive control is performed in accordance with the movement amount of the pinch operation and a current zoom magnification (zoom position).

### Mode(s) for Carrying Out the Invention

Hereinafter, a mode for carrying out the present technology will be described. It should be noted that description is given in the following order.
1. Configuration of Imaging System
   1-1. Outer Appearance of Imaging System
   1-2. Functional Configuration of Imaging apparatus
   1-3. Functional Configuration of Information Processing Apparatus
2. Behavior of Imaging System
   2-1. Linkage between Imaging Apparatus and Information Processing Apparatus
   2-2. Zoom Behavior of Imaging apparatus
   2-3. Zoom Control Behavior of Information Processing Apparatus
3. Another Behavior of Imaging System
   3-1. Another Behavior of Imaging apparatus
   3-2. Another Behavior of Information Processing Apparatus

### <1. Configuration of Imaging System>

An imaging system includes an imaging apparatus and an information processing apparatus. The imaging apparatus has a zoom function so as to generate image information of a still image or a moving image having a desired angle of view, for example. Further, the imaging apparatus has a wireless communication function and enables wireless communication with the information processing apparatus. The imaging apparatus performs a behavior on the basis of a control signal supplied from the information processing apparatus by wireless communication. Additionally, the imaging apparatus outputs various types of information to the information processing apparatus by wireless communication.

The information processing apparatus is a device having a display function and a wireless communication function, and for example, a mobile phone, a smartphone, a tablet terminal, or a laptop computer can be used as the information processing apparatus. The information processing apparatus generates a control signal for operating the imaging apparatus and outputs the control signal to the imaging apparatus by wireless communication. Further, the information processing apparatus performs processing of information supplied from the imaging apparatus by wireless communication. For example, the information processing apparatus performs display of a captured image on the basis of image information supplied from the imaging apparatus.

### [1-1. Outer Appearance of Imaging System]

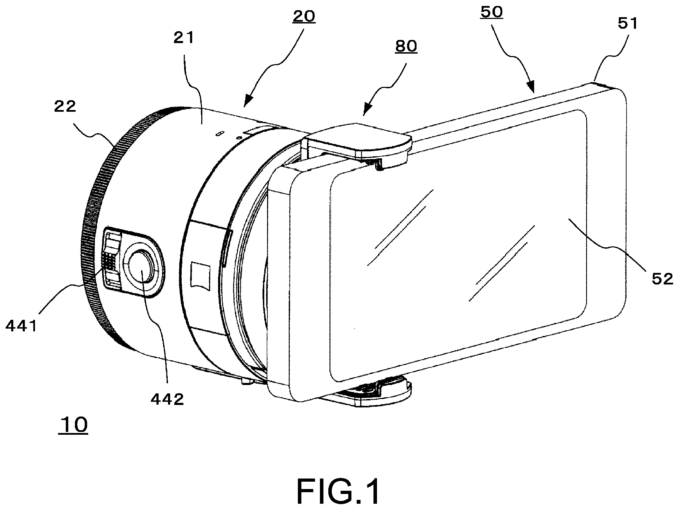

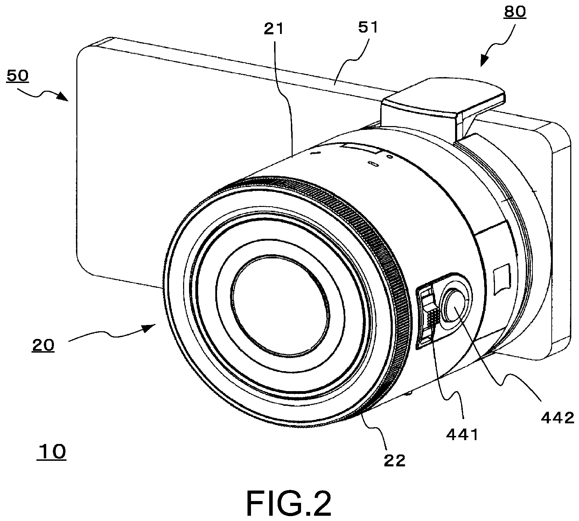

Figs. 1 and 2 exemplify the outer appearance of the imaging system as one embodiment of the present technology. It should be noted that Fig. 1 shows a rear side of the imaging system, and Fig. 2 shows a front side of the imaging system. Further, for example, a smartphone is used as the information processing apparatus.

The imaging system 10 includes an imaging apparatus 20 and an information processing apparatus (for example, smartphone) 50.

The imaging apparatus 20 includes an imaging optical system block, an imaging unit, a signal processing unit, a communication unit, a camera control unit, and the like, which are not shown in the figure, inside an outer barrel 21 formed in a cylindrical shape. An annular control ring 22 is provided to the front end of the outer barrel 21. The imaging apparatus 20 changes a focus position or a zoom position in accordance with the rotation of the control ring 22. Therefore, the use of the control ring 22 enables a manual operation of focus adjustment and the like. Further, a zoom button 441 and a shutter button 442 are provided on the side surface of the outer barrel 21. The imaging apparatus 20 changes the zoom position to a wide-angle side or a telephoto side at a predetermined speed in accordance with the operation of the zoom button 441. Further, the imaging apparatus 20 performs, in the case of a still image mode, processing of recording a still image when the shutter button 442 is operated by a user on a recording medium. Further, the imaging apparatus 20 performs, in the case of a moving image mode, starts or terminates recording of a moving image in accordance with the operation of the shutter button 442.

The information processing apparatus 50 includes a signal processing unit, a communication unit, a control unit, and the like, which are not shown in the figure, inside an outer casing 51 formed in a substantially cuboid case shape. Further, a display panel 52 is provided to one surface (back surface) of the outer casing 51. The display panel 52 is a touch panel, and various functions are executed by operating predetermined positions of the display panel 52.

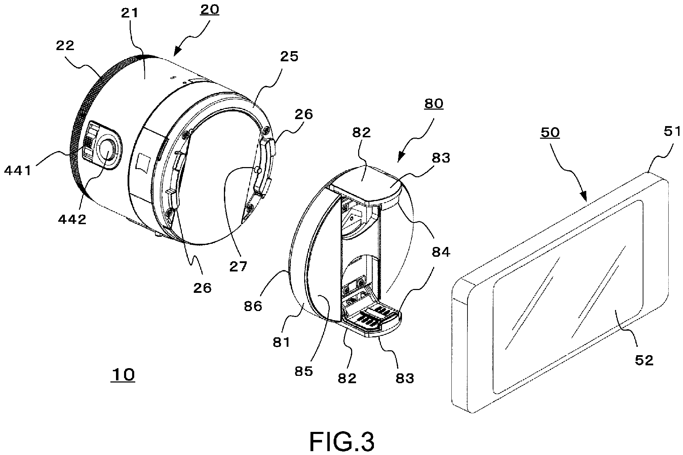

The imaging system 10 is not limited to the case where the imaging apparatus 20 and the information processing apparatus 50 are integrated as shown in Figs. 1 and 2, and can be used by separating the imaging apparatus 20 and the information processing apparatus 50 from each other. It should be noted that Fig. 3 exemplifies a case where the imaging apparatus 20 and the information processing apparatus 50 are integrated using an adaptor 80.

A disc-like rear panel 25 is attached to the rear end of the imaging apparatus 20. Coupling parts 26 protruding backward are provided on the outer circumference of the rear panel 25. A lock pin 27 movable in a front and rear direction is supported by the rear panel 25 movably in the front and rear direction. The lock pin 27 is biased backward by a biasing member not shown in the figure. An unlock lever not shown is provided to the imaging apparatus 20 and is configured such that the lock pin 27 is drawn into the rear panel 25 when the unlock lever is operated.

In the adaptor 80, a pair of attached bodies 82 is rotatably provided to ends of a cylindrical-shaped casing 81 having the size corresponding to the outer barrel 21 of the imaging apparatus 20, so as to stand up from a first facing surface 85 to the information processing apparatus 50 in the casing 81. Further, the attached bodies 82 are biased by biasing members in a direction in which a standing state is changed to a lying state. The pair of attached bodies 82 includes substantially plate-shaped grip parts 83 and holding protrusions 84 protruding inward from tips of the grip parts 83. A second facing surface 86 to the imaging apparatus 20 in the casing 81 is provided with coupling concave parts, into which the coupling parts 26 of the imaging apparatus 20 are inserted, and a lock hole, into which the lock pin 27 is inserted. The coupling concave parts and the lock hole are not shown in the figure.

In the case where the imaging apparatus 20 and the adaptor 80 are coupled to each other, a user inserts the coupling parts 26 of the imaging apparatus 20 into the coupling concave parts of the adaptor 80 and then rotates the imaging apparatus 20 in a predetermined direction. The coupling parts 26 are inserted into the coupling concave parts and rotated, and thus enter a state of being locked to engaged concave parts. Further, when the coupling parts 26 enter a state of being locked to the coupling concave parts, the lock pin 27 enters a state of being inserted into the lock hole. Therefore, the imaging apparatus 20 and the adaptor 80 are locked in a coupled state. Further, in the case where the imaging apparatus 20 and the adaptor 80 are separated from each other, the unlock lever is operated so that the imaging apparatus 20 is rotated in the opposite direction to the predetermined direction. When the unlock lever is operated, the lock pin 27 is removed from the lock hole. In this state, when the imaging apparatus 20 is rotated in the opposite direction, the locked state of the coupling parts 26 and the coupling concave parts is canceled. Therefore, the imaging apparatus 20 and the adaptor 80 can be separated from each other.

In the case where the adaptor 80 is coupled to the information processing apparatus 50, the user makes the attached bodies 82 of the adaptor 80 stand up from the first facing surface 85. Further, the user sets an interval of the pair of attached bodies 82 to have a width corresponding to the outer casing 51 of the information processing apparatus 50 and makes the grip parts 83 of the pair of attached bodies 82 sandwich the outer casing 51. Further, the holding protrusions 84 are locked to the back surface (display panel side) of the outer casing 51. In such a manner, the adaptor 80 can be coupled to the information processing apparatus 50. It should be noted that the separation of the information processing apparatus 50 and the adaptor 80 only needs to cancel the gripped state by the grip parts 83 and the locked state by the holding protrusions 84.

If the imaging apparatus 20, the information processing apparatus 50, and the adaptor 80 are configured as described above, the imaging apparatus 20 and the information processing apparatus 50 can be used integrally or separately. It should be noted that the configuration of the adaptor 80 is not limited to the configuration shown in Fig. 3 and may be another configuration. Further, the imaging apparatus 20 and the information processing apparatus 50 may be configured to be capable of being integrated or separated without using the adaptor 80.

### [1-2. Functional Configuration of Imaging apparatus]

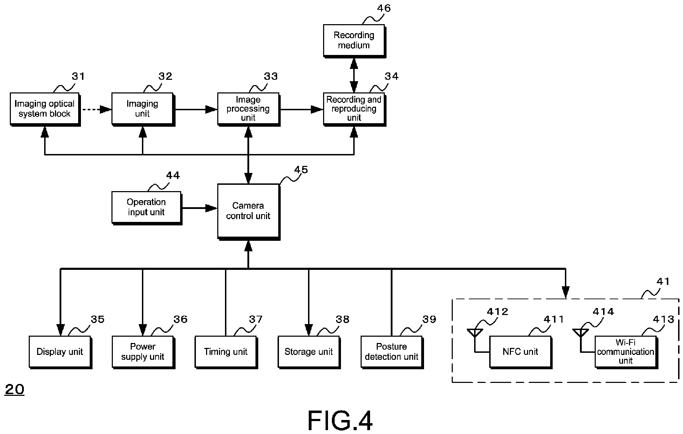

Next, a functional configuration of the imaging apparatus will be described. Fig. 4 is a block diagram exemplifying a functional configuration of the imaging apparatus.

As shown in Fig. 4, the imaging apparatus 20 includes an imaging optical system block 31, an imaging unit 32, an image processing unit 33, a recording and reproducing unit 34, a display unit 35, a power supply unit 36, a timing unit 37, a storage unit 38, a posture detection unit 39, a wireless communication unit 41, an operation input unit 44, and a camera control unit 45. Further, the imaging apparatus 20 is attachably and detachably provided with a recording medium 46.

The imaging optical system block 31 includes a lens group constituted of a focus lens, a zoom lens, and the like, a diaphragm adjustment mechanism, and a drive unit that drives the lens group and the diaphragm adjustment mechanism. Further, the imaging optical system block 31 may include a shutter mechanism, a hand-shake correction mechanism, and the like.

The imaging unit 32 is constituted by using an imaging device such as a CCD (Charge Coupled Device) or a CMOS (Complementary Metal Oxide Semiconductor). The imaging unit 32 converts an optical image of a subject, which is formed by the imaging optical system block 31, into an image signal. The imaging unit 32 outputs the image signal generated by photoelectric conversion to the image processing unit 33.

The image processing unit 33 performs various types of signal processing and the like on the image signal output from the imaging unit 32. For example, the image processing unit 33 performs noise removal, color correction, edge detection, and the like as necessary. The image processing unit 33 outputs the image signal subjected to the processing to the recording and reproducing unit 34.

Using the recording medium 46, the recording and reproducing unit 34 records a captured image and reproduces the recorded captured image. The recording and reproducing unit 34 records the image signal of a still image or a moving image, which is generated in the imaging unit 32 and processed in the image processing unit 33, on the recording medium 46. Further, the recording and reproducing unit 34 reproduces the still image or the moving image recorded on the recording medium 46 and reads the image signal. It should be noted that the recording and reproducing unit 34 may record the image signal, which is not yet processed in the image processing unit 33, on the recording medium 46. Further, the recording and reproducing unit 34 may perform encoding processing of compressing a signal amount of the image signal recorded on the recording medium 46 and decoding processing of encoded data recorded on the recording medium 46.

The display unit 35 is constituted using, for example, a liquid crystal element, and performs display of captured images or display of information indicating a setting status or a behavior status of the imaging apparatus 20. The power supply unit 36 is constituted of a battery and a power supply circuit. The power supply unit 36 performs power supply to units of the imaging apparatus 20 in accordance with a control signal output from the camera control unit 45. The timing unit 37 counts time and outputs time information indicating a current time to the recording and reproducing unit 34, so that a time of imaging can be recorded together with a captured image.

The storage unit 38 is a recording medium such as a RAM (Random Access Memory) or a ROM (Read Only Memory). The RAM is used as a work area of the camera control unit 45, for example. Further, in the ROM, for example, a program for executing various types of control in the camera control unit 45 is stored. Further, in the ROM or RAM, control information used for performing various types of control in the camera control unit 45 and the like are stored.

The posture detection unit 39 detects a posture of the imaging apparatus 20 or a change in posture. The posture detection unit 39 is constituted using a gravity sensor, a gyroscope, a three-axis acceleration sensor, or the like, and detects a change in posture of the imaging apparatus 20 in a vertical direction or a horizontal direction, a rotation position or a change in rotation position of the imaging apparatus 20 with the optical axis of the imaging optical system block 31 being as a rotation axis, and the like. The posture detection unit 39 outputs a posture detection signal to the camera control unit 45. It should be noted that if the posture detection signal is output to the information processing apparatus 50 together with the image signal of the captured image, the captured image can be displayed in consideration of the posture of the imaging apparatus 20. For example, in the case where the imaging apparatus 20 is tilted with respect to the horizontal direction and a captured image is generated, in the information processing apparatus 50, a subject with no tilt with respect to the horizontal direction is displayed with tilt with respect to the horizontal direction. However, if the posture detection signal is used to correct the tilt, the subject with no tilt with respect to the horizontal direction can be displayed correctly in a state with no tilt.

The wireless communication unit 41 includes an NFC (Near Field Communication) unit 411, an NFC antenna 412, a Wi-Fi communication unit 413, and a Wi-Fi antenna 414.

The NFC unit 411 is an interface that cooperates with the NFC antenna 412 to perform contactless communication with an adjacent external apparatus (for example, information processing apparatus 50) according to the control by the camera control unit 45. The NFC unit 411 transmits radio waves that reach a close range of approximately 3 cm to 10 cm, or depending on the design, approximately 7 mm, from the NFC antenna 412, and performs the NFC with an external apparatus included within the radio wave reach range. For example, the NFC unit 411 transmits connection information (Wi-Fi Configuration) for an automatic connection to Wi-Fi and an AAR (Android Application Record) in accordance with a check command from the external apparatus. The connection information includes an SSID (Service Set Identifier) for a Wi-Fi connection, a PassKey (encryption key), and the like.

The Wi-Fi communication unit 413 is an interface that cooperates with the Wi-Fi antenna 414 to perform wireless communication with a surrounding external apparatus (for example, information processing apparatus 50) according to the control by the camera control unit 45. For example, the Wi-Fi communication unit 413 performs Wi-Fi authentication in response to a Wi-Fi connection request from the external apparatus and performs processing of establishing a Wi-Fi communication connection with the external apparatus.

The operation input unit 44 detects an operation input by the user and outputs an operation signal corresponding to the user operation to the camera control unit 45. The operation input unit 44 includes the above-mentioned zoom button 441 and shutter button 442 and has a configuration in which a function is previously assigned to a physical switch.

The camera control unit 45 executes a program recorded in the storage unit 38 and generates a control signal on the basis of the operation signal supplied from the operation input unit 44, control information stored in the storage unit 38, and the like. The camera control unit 45 outputs the generated control signal to the units and performs imaging control, image processing control, recording and reproducing control, and the like such that a behavior corresponding to the user operation is performed in the imaging apparatus 20. Further, the camera control unit 45 controls the NFC unit 411 and the Wi-Fi communication unit 413 of the wireless communication unit 41 to perform wireless communication with the information processing apparatus 50, and performs zoom drive control on the basis of a zoom control signal supplied from the information processing apparatus 50. Additionally, in the case where the camera control unit 45 performs the zoom drive control in accordance with a zoom operation received at the operation input unit 44 or a zoom control signal received at the wireless communication unit 41, the camera control unit 45 sets a different zoom position change speed between the zoom drive control corresponding to the zoom operation received at the operation input unit 44 and the zoom drive control corresponding to the zoom control signal.

The recording medium 46 is a memory card or the like in which the captured image or the like is written, and is attachably and detachably provided.

### [1-3. Functional Configuration of Information Processing Apparatus]

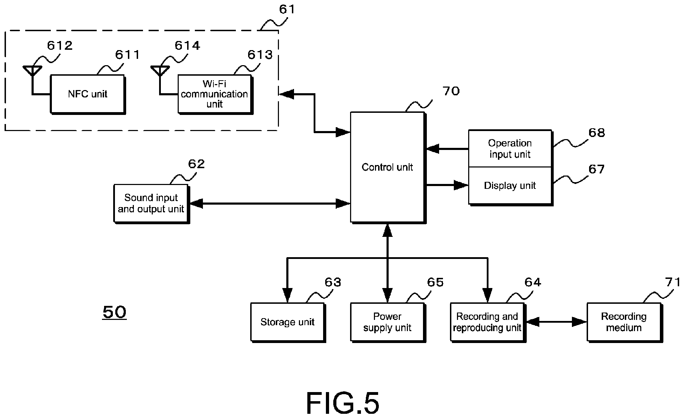

Next, a functional configuration of the information processing apparatus will be described. Fig. 5 is a block diagram exemplifying a functional configuration of the information processing apparatus (for example, smartphone).

As shown in Fig. 5, the information processing apparatus 50 includes a wireless communication unit 61, a sound input and output unit 62, a storage unit 63, a recording and reproducing unit 64, a power supply unit 65, a display unit 67, an operation input unit 68, and a control unit 70. Further, the information processing apparatus 50 is attachably and detachably provided with a recording medium 71.

The wireless communication unit 61 includes an NFC unit 611, an NFC antenna 612, a Wi-Fi communication unit 613, and a Wi-Fi antenna 614. It should be noted that the wireless communication unit 61 may be provided with a communication unit complying with a communication standard of a cellular phone, though not shown in the figure.

The NFC unit 611 is an interface that cooperates with the NFC antenna 612 to perform contactless communication with an adjacent external apparatus (for example, imaging apparatus 20) according to the control by the control unit 70. The NFC unit 611 performs NFC with the imaging apparatus 20 as described above, for example.

The Wi-Fi communication unit 613 is an interface that cooperates with the Wi-Fi antenna 614 to perform wireless communication with a surrounding external apparatus (for example, imaging apparatus 20) according to the control by the control unit 70. For example, the Wi-Fi communication unit 613 performs processing of establishing a Wi-Fi communication connection with the imaging apparatus 20 as described above, for example.

The sound input and output unit 62 is constituted using a speaker and a microphone. The sound input and output unit 62 inputs and outputs sound of voice call performed via the wireless communication unit 61. Further, the sound input and output unit 62 outputs reproduced sound of music content or moving image content recorded in the storage unit 63 or on the recording medium 71.

The storage unit 63 is a recording medium such as a RAM (Random Access Memory) or a ROM (Read Only Memory). The RAM is used as a work area of the control unit 70, for example. Further, in the ROM, for example, a program for executing various types of control in the control unit 70 is stored. Further, in the ROM or RAM, control information used for performing various types of control in the control unit 70 and the like are stored. Additionally, in the RAM, music content or moving image content, programs of various applications, a captured image supplied from the imaging apparatus 20, mail information, and the like can be recorded.

Using the recording medium 71, the recording and reproducing unit 64 records various types of information and reads the recorded information. The recording and reproducing unit 64 records, for example, music content or moving image content, captured image, mail information, and another person's address information used in wireless communication on the recording medium 71. Further, the recording and reproducing unit 64 reads various types of information recorded on the recording medium 71.

The power supply unit 65 is constituted of a battery and a power supply circuit. The power supply unit 65 performs power supply to units of the information processing apparatus 50.

The display unit 67 is constituted using a display element such as a liquid crystal display or an organic EL display. The display unit 67 displays a GUI (Graphical User Interface) screen, letters or images corresponding to a behavior of an application, and the like according to the control of the control unit 70.

The operation input unit 68 is constituted using an operation switch or a touch panel. The touch panel is provided on the display screen of the display unit 67 and has a configuration in which a function is assigned in accordance with display of the display screen. The operation input unit 68 generates an operation signal corresponding to a user operation and outputs the operation signal to the control unit 70. It should be noted that the display panel 52 described above is constituted by the display unit 67 and the operation input unit 68.

The control unit 70 executes a program recorded in the storage unit 63 and generates a control signal on the basis of the operation signal supplied from the operation input unit 68, control information stored in the storage unit 63, and the like. The control unit 70 outputs the generated control signal to the units and performs communication control, display control, recording and reproducing control, and the like such that a behavior corresponding to the user operation is performed in the information processing apparatus 50. Further, the control unit 70 controls the NFC unit 611 and the Wi-Fi communication unit 613 to perform wireless communication with the imaging apparatus 20. Additionally, the control unit 70 performs processing of activating a predetermined application program on the basis of communication with the imaging apparatus 20, processing of generating, after the activation of the program, a zoom control signal for controlling a zoom behavior in the imaging apparatus in accordance with at least any of an operation position of a zoom operation, an operation period, and a movement amount of the operation position on the basis of the operation signal, and transmitting the zoom control signal to the imaging apparatus 20, and the like.

### <2. Behavior of Imaging System>

### [2-1. Linkage between Imaging Apparatus and Information Processing Apparatus]

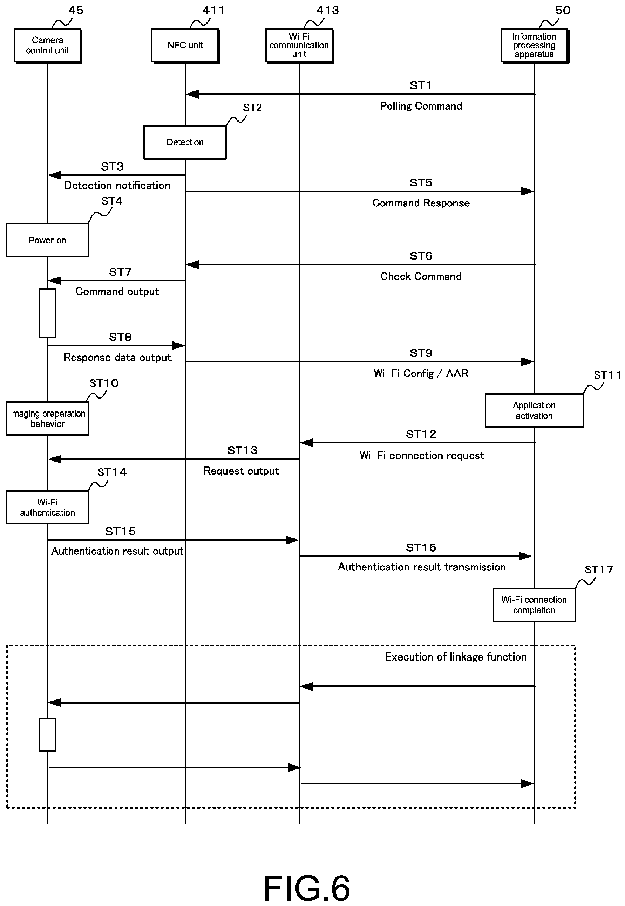

Next, a behavior of the imaging system will be described. Fig. 6 is a sequence diagram showing behavior processing to the start of a linkage function between the imaging apparatus and the information processing apparatus in the imaging system.

In Step ST1, the information processing apparatus 50 transmits a polling command by NFC. Here, when the NFC antenna 412 of the imaging apparatus 20 is included within a predetermined radio wave reach range from the NFC antenna 612 of the information processing apparatus 50, in Step ST2, the NFC unit 411 of the imaging apparatus 20 detects the transmission of the polling command.

In Step ST3, the NFC unit 411 of the imaging apparatus 20 notifies the camera control unit 45 of the detection in response to the detection of the NFC from the information processing apparatus 50.

In Step ST4, the camera control unit 45 generates a control signal in response to the detection notification by the NFC unit 411 and outputs the control signal to the power supply unit 36, to perform power-on control.

In Step ST5, the NFC unit 411 transmits a command response by the NFC, in response to the detection of the NFC.

In Step ST6, the information processing apparatus 50 detects the command response from the imaging apparatus 20, and thus finds the other party of the NFC and transmits a check command in order to acquire predetermined information.

In Step ST7, the NFC unit 411 of the imaging apparatus 20 outputs the check command, which is received by the NFC, to the camera control unit 45.

In Step ST8, the camera control unit 45 outputs response data to the NFC unit 411 in response to the check command. Here, the response data includes the Wi-Fi Config and AAR described above.

In Step ST9, the NFC unit 411 transmits the response data to the information processing apparatus 50 by the NFC. It should be noted that Steps ST6 to ST9 described above may be performed a plurality of times and the response data may be transmitted in a plurality of times.

In Step ST10, the camera control unit 45 performs an imaging preparation behavior. The camera control unit 45 performs a preparation behavior such that imaging is enabled in the imaging apparatus 20. Further, in the preparation behavior, a preparation behavior capable of discriminating that the imaging apparatus 20 enters a state capable of performing imaging may be performed. For example, the camera control unit 45 performs a behavior of projecting a lens when a collapsible lens is used as the imaging optical system block 31, a behavior of outputting a start-up sound, and the like. It should be noted that the imaging preparation behavior may be performed after a Wi-Fi connection is completed.

In Step ST11, the information processing apparatus 50 activates a predetermined application according to the received AAR. For example, in the predetermined application, processing of receiving an image signal of a captured image transmitted from the imaging apparatus 20 by Wi-Fi communication and displaying the captured image, and the like are performed.

In Step ST12, the information processing apparatus 50 makes a Wi-Fi connection request to the imaging apparatus 20 by using the received Wi-Fi Config.

In Step ST13, the Wi-Fi communication unit 413 of the imaging apparatus 20 outputs the connection request, which is received from the information processing apparatus 50, to the camera control unit 45.

In Step ST14, the camera control unit 45 performs Wi-Fi authentication. It should be noted that the Wi-Fi authentication may be performed in the Wi-Fi communication unit 413.

In Step ST15, the camera control unit 45 outputs an authentication result to the Wi-Fi communication unit 413.

In Step ST16, the Wi-Fi communication unit 413 transmits the authentication result to the information processing apparatus 50. In Step ST17, in the information processing apparatus 50, the Wi-Fi connection is completed by the success of the authentication. After that, the imaging apparatus 20 and the information processing apparatus 50 executes a linkage function using the Wi-Fi communication.

It should be noted that the imaging apparatus 20 and the information processing apparatus 50 only need to be linked by the Wi-Fi communication or the like, and the processing to the start of the linkage function between the imaging apparatus 20 and the information processing apparatus 50 is not limited to the processing in the order shown in Fig. 6.

### [2-2. Zoom Behavior of Imaging Apparatus]

Next, a zoom behavior of the imaging apparatus 20 in the case where the linkage function between the imaging apparatus 20 and the information processing apparatus 50 is achieved will be described.

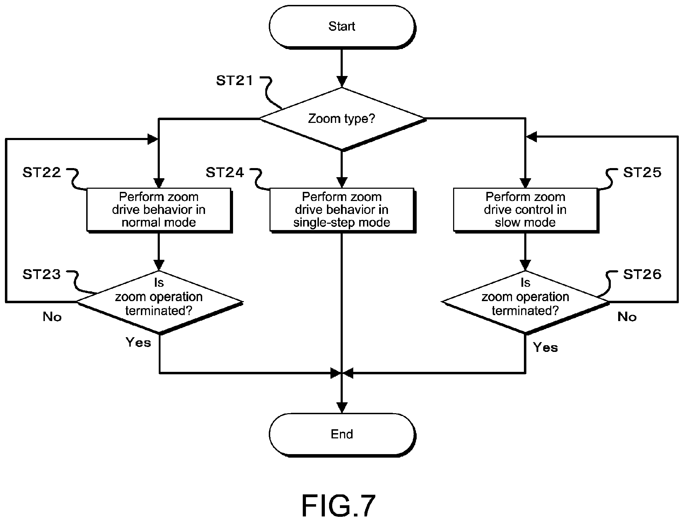

When detecting that the zoom button 441 is operated on the basis of the operation signal from the operation input unit 44 or detecting that the zoom control signal is supplied from the information processing apparatus 50 by Wi-Fi communication, the camera control unit 45 of the imaging apparatus 20 performs processing shown in Fig. 7.

Fig. 7 is a flowchart showing a behavior of the imaging apparatus. In Step ST21, the camera control unit 45 determines a zoom operation type of the zoom request. In the case of determining a zoom request using the zoom button 441 provided to the imaging apparatus 20, the camera control unit 45 proceeds to Step ST22. Further, in the case where the zoom request is from the information processing apparatus 50 and performs zoom drive control only for a preset period, the camera control unit 45 proceeds to Step ST24. Additionally, in the case where the zoom request is from the information processing apparatus 50 and is a start instruction of the zoom drive control, the camera control unit 45 proceeds to Step ST25. It should be noted that the zoom request indicates to which direction of the wide-angle side and the telephoto side a zoom position is changed on the basis of the user operation.

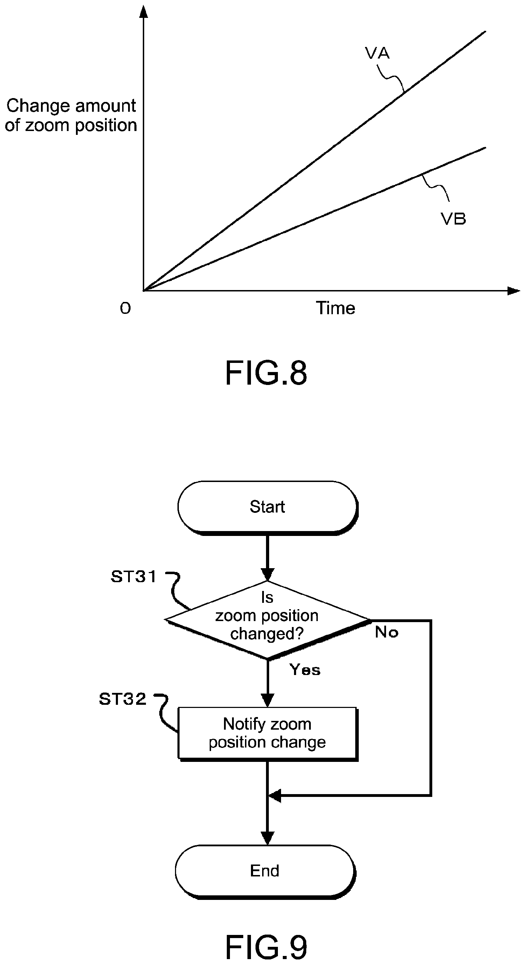

In Step ST22, the camera control unit 45 performs zoom drive control in a normal mode. The camera control unit 45 proceeds to Step ST23 through processing of changing the zoom position to a direction indicated by the zoom request from the operation input unit 44 at a normal change speed. Fig. 8 exemplifies change characteristics of the zoom position, and for example, when performing the zoom drive control in the normal mode, the camera control unit 45 changes the zoom position to a direction indicated by the zoom request at a zoom position change speed VA (corresponding to the normal change speed).

In Step ST23, the camera control unit 45 determines whether the zoom operation is terminated or not. When determining that the operation of the zoom button 441 is continued, the camera control unit 45 returns back to Step ST22, and when determining that the operation of the zoom button 441 is terminated, the camera control unit 45 terminates the zoom drive control.

When proceeding from Step ST21 to Step ST24, the camera control unit 45 performs zoom drive control in a single-step mode. The camera control unit 45 changes the zoom position to a direction indicated by the zoom request from the information processing apparatus 50, for example, at a lower change speed that is slower than the normal change speed only for a preset period, and then terminates the zoom drive control. In the case where the zoom drive control is performed in the single-step mode, for example, the camera control unit 45 changes the zoom position to a direction indicated by the zoom request at a zoom position change speed VB, which is slower than the zoom position change speed VA shown in Fig. 8, only for a preset period. It should be noted that in the single-step mode, the zoom position may be changed at the normal change speed.

When proceeding from Step ST21 to Step ST25, the camera control unit 45 performs zoom drive control in a slow mode. The camera control unit 45 changes the zoom position to a direction indicated by the zoom request from the information processing apparatus 50, for example, at a lower change speed that is slower than the normal change speed, and then proceeds to the Step ST26. In the case where the zoom drive control is performed in the slow mode, the camera control unit 45 changes the zoom position to a direction indicated by the zoom request at the zoom position change speed VB, for example.

In Step ST26, the camera control unit 45 determines whether the zoom operation is terminated or not. In the case where the fact that the zoom operation is continued is indicated by a radio signal from the information processing apparatus 50, the camera control unit 45 returns to Step ST25, and in the case where the zoom operation is terminated, the camera control unit 45 terminates the zoom drive control.

Further, during the period in which the zoom drive control is being performed in the normal mode, the single-step mode, and the slow mode, the camera control unit 45 may perform zoom position notification processing shown in Fig. 9 and notify the information processing apparatus 50 of a changed zoom position in the imaging apparatus 20.

In Step ST31, the camera control unit 45 determines whether the zoom position is changed or not. When the zoom position is changed, the camera control unit 45 proceeds to Step ST32, and if not, terminates the processing.

In Step ST32, the camera control unit 45 notifies a zoom position change. The camera control unit 45 transmits zoom position change information, which indicates a changed zoom position, as a radio signal, to the information processing apparatus 50 by Wi-Fi communication.

In such a manner, the zoom position is notified from the imaging apparatus 20 to the information processing apparatus 50, and thus the zoom position of the imaging apparatus 20 can be confirmed in the information processing apparatus 50 in the case where the zoom operation of the imaging apparatus 20 is performed in the information processing apparatus 50. It should be noted that in the example of Fig. 7, the single-step mode is included in addition to the normal mode and the slow mode, but the single-step mode may not be included.

### [2-3. Zoom Control Behavior of Information Processing Apparatus]

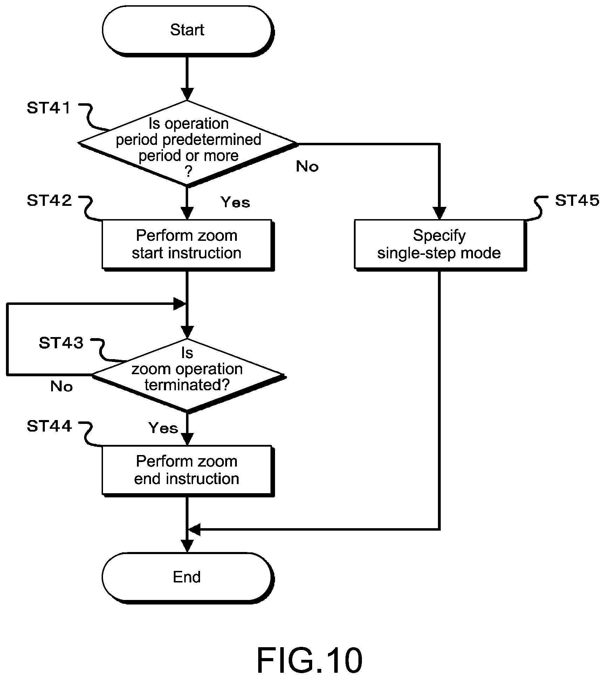

Next, a zoom control behavior of the information processing apparatus will be described. Fig. 10 is a flowchart showing a behavior of the information processing apparatus. In the case where the linkage function with the imaging apparatus 20 is executed and a zoom operation of the imaging apparatus 20 is performed, the information processing apparatus 50 provides a GUI including icon display for changing the zoom position to the wide-angle side and icon display for changing the zoom position to the telephoto side, for example, on the screen of the display unit 67. It should be noted that the icon display for changing the zoom position to the wide-angle side is assumed as a wide-angle zoom button, and the icon display for changing the zoom position to the telephoto side is assumed as a telephoto zoom button. In the case where a zoom operation is performed using the wide-angle zoom button or the telephoto zoom button, the information processing apparatus 50 performs processing from the Step ST41 and causes the imaging apparatus 20 to perform the zoom drive control.

In Step ST41, the control unit 70 determines whether an operation period of consecutive zoom operations is a predetermined period or more. In the case where the operation period of any of the wide-angle zoom button and the telephoto zoom button is a predetermined period or more, the control unit 70 proceeds to Step ST42, and in the case where the operation is terminated before the operation period of the zoom button reaches the predetermined period or more, the control unit 70 proceeds to Step ST45. For example, in the case where any of the wide-angle zoom button and the telephoto zoom button is operated only for a period shorter than the predetermined period (hereinafter, called "touch operation"), the control unit 70 proceeds to Step ST45. Further, in the case where any of the wide-angle zoom button and the telephoto zoom button is operated for a predetermined period or more (hereinafter, called "push operation"), the control unit 70 proceeds to Step ST42.

In Step ST42, the control unit 70 performs a zoom start instruction. The control unit 70 determines whether any of the wide-angle zoom button and the telephoto zoom button is operated, and generates a zoom control signal for starting the zoom drive control to change the zoom position to a direction of the operated zoom button. The control unit 70 outputs the generated zoom control signal to the Wi-Fi communication unit 613 of the wireless communication unit 61, transmits the zoom control signal from the Wi-Fi antenna 614 to the imaging apparatus 20, and then proceeds to Step ST43.

In Step ST43, the control unit 70 determines whether the zoom operation is terminated or not. In the case where the zoom operation using any of the wide-angle zoom button and the telephoto zoom button is terminated, the control unit 70 proceeds to Step ST44, and in the case where the zoom operation is continued, the control unit 70 returns back to Step ST43.

In Step ST44, the control unit 70 performs a zoom end instruction. The control unit 70 generates a zoom control signal for terminating the zoom drive control to change the zoom position. The control unit 70 outputs the generated zoom control signal to the Wi-Fi communication unit 613 of the wireless communication unit 61, transmits the zoom control signal from the Wi-Fi antenna 614 to the imaging apparatus 20, and then terminates the processing.

When proceeding from Step ST41 to Step ST45, the control unit 70 specifies a single-step mode. The control unit 70 generates a zoom control signal for performing zoom drive control in the single-step mode in which the zoom drive control is performed only for a preset period. The control unit 70 outputs the generated zoom control signal to the Wi-Fi communication unit 613 of the wireless communication unit 61, transmits the zoom control signal from the Wi-Fi antenna 614 to the imaging apparatus 20, and terminates the processing.

In such a manner, the control unit 70 generates a zoom control signal for controlling a zoom behavior in the imaging apparatus 20 in accordance with the operation position of the zoom operation and the operation period, and transmits the zoom control signal to the imaging apparatus 20.

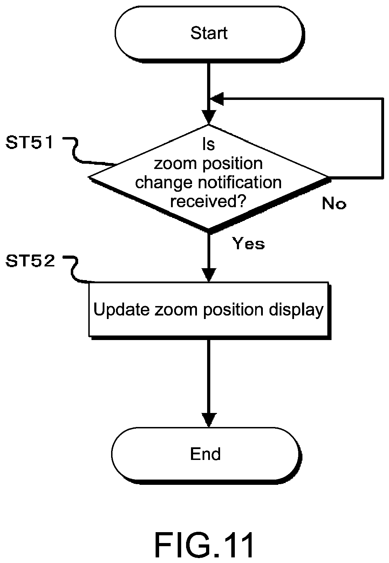

Further, in the case where the zoom position change is notified in the imaging apparatus 20, the control unit 70 performs zoom position display processing shown in Fig. 11.

In Step ST51, the control unit 70 determines whether zoom position change information is received or not. In the case where a radio signal indicating the zoom position change information is not received from the imaging apparatus 20, the control unit 70 returns back to Step ST51, and in the case where a radio signal indicating the zoom position change information is received, the control unit 70 proceeds to Step ST52.

In Step ST52, the control unit 70 updates zoom position display. The control unit 70 changes the zoom position, which is indicated, for example, as zoom bar display on the screen of the display unit 67, to a changed zoom position and terminates the processing.

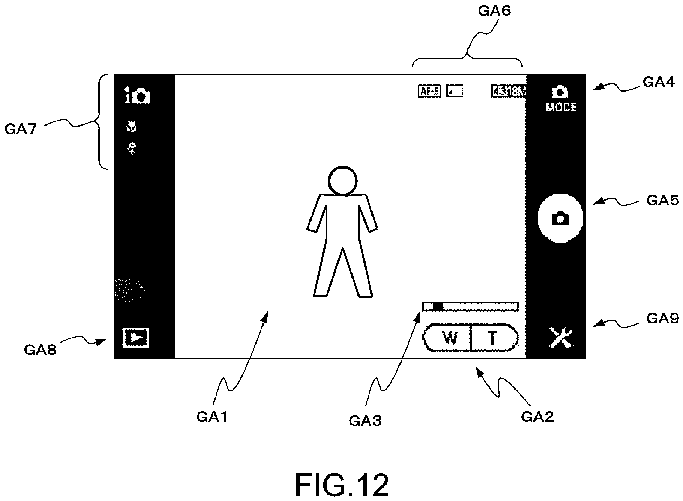

Fig. 12 exemplifies a display screen of the display unit in the information processing apparatus. It should be noted that Fig. 12 shows a display screen of a case where the linkage function between the information processing apparatus and the imaging apparatus is executed, for example.

An image GA1 is a camera through image, a recorded still image, a moving image during recording, a reproduced still image or moving image, or the like. An image GA2 is a zoom button and is provided with a wide-angle zoom button (W) and a telephoto zoom button (T). An image GA3 is zoom bar display indicating a zoom position. An image GA4 is an imaging mode switch button for selecting a still image or a moving image for a captured image. An image GA5 is a shutter button and an operation button for starting and stopping imaging of a still image and recording of a moving image. An image GA6 is information display indicating a mount state of the recording medium 46, a recording mode when a captured image is recorded on the recording medium 46, and the like. An image GA7 is imaging mode display indicating what imaging mode is selected and the like. An image GA8 is a reproduction button for reproducing a recorded still image or moving image. An image GA9 is a setting button used when various settings of the imaging apparatus 20 and the like are performed.

In the case where the zoom position of the imaging apparatus 20 is changed to the wide-angle side or the telephoto side, the user touches or pushes the zoom button of the image GA2. In the case where the control unit 70 detects that a touch operation or a push operation is performed in a display area of the image GA2, the control unit 70 determines a changed direction of the zoom position on the basis of the operation made on the wide-angle side (W) or the telephoto side (T) of the zoom button. Further, the control unit 70 transmits a zoom control signal including information indicating the determined changed direction of the zoom position to the imaging apparatus 20 by Wi-Fi communication. Further, the control unit 70 generates a zoom control signal for performing zoom drive control in the single-step mode in the case of the touch operation and for starting zoom drive control in the slow mode in the case of the push operation. Additionally, the control unit 70 generates a zoom control signal for terminating zoom drive control in the slow mode in the case where the push operation is terminated.

In such a manner, in the case where the linkage function between the imaging apparatus 20 and the information processing apparatus 50 is executed and a zoom operation is performed in the information processing apparatus 50, a zoom position change speed is slower than a speed in the case where the zoom operation is performed in the imaging apparatus 20. Therefore, even when a response to the zoom operation of the information processing apparatus 50 is slow as compared with a case where the zoom operation is performed in the imaging apparatus 20, a change amount of the zoom position with respect to the operation period is reduced, and thus the zoom position is easily changed to a desired position. In other words, in each of the zoom operation received at the operation input unit 44 of the imaging apparatus 20 and the zoom operation received at an external apparatus, for example, at the operation input unit 68 of the information processing apparatus 50, the zoom position change speed is switched to an adequate speed. In such a manner, since the zoom position change speed can be switched between a speed adequate to the zoom operation received at the operation input unit and a speed adequate to the zoom operation performed in the external apparatus, even when the zoom operation is performed in any of the imaging apparatus and the external apparatus, a zoom behavior with good operability can be performed. It should be noted that in this example, the single-step mode is included in addition to the normal mode and the slow mode, but the single-step mode may not be included.

### <3. Another Behavior of Imaging System>

### [3-1. Another Behavior of Imaging apparatus]

In the imaging apparatus 20 described above, the zoom position change speed is previously set to a constant speed, and in the case where the zoom operation is performed in the information processing apparatus 50, the zoom behavior is performed by selecting a constant speed slower than in the case where the zoom operation is performed in the imaging apparatus 20. For example, in the case of a zoom request using the zoom button 441 provided to the imaging apparatus 20, the zoom position change speed is assumed as a first zoom position change speed VA, and in the case of a zoom request from the information processing apparatus 50, the zoom position change speed is set as a second zoom position change speed VB that is slower than the first zoom position change speed. However, the zoom position change speed is not limited to a constant speed and may be changed during the zoom behavior. Further, in the case of a zoom request from the information processing apparatus 50, the zoom position change speed may be set to a zoom position change speed faster than the first zoom position change speed VA.

Next, as another behavior in the imaging apparatus, a behavior of switching the zoom position change speed during the zoom behavior in the case where a zoom operation is performed in the information processing apparatus 50 will be described.

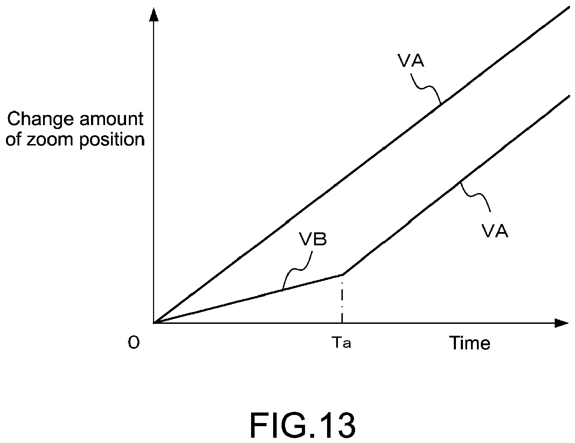

Fig. 13 exemplifies change characteristics of the zoom position in another behavior and shows, for example, a case where the second zoom position change speed VB is switched to the first zoom position change speed VA on the basis of a zoom position change period. In the case of a zoom request from the information processing apparatus 50, the camera control unit 45 of the imaging apparatus 20 sets the second zoom position change speed VB until a zoom position change period (corresponding to a push operation period) reaches a time Ta, for example. After that, in the case where the zoom position change period exceeds the time Ta, the zoom position is changed at the first zoom position change speed VA.

In such a manner, in the case where the zoom operation is performed in the information processing apparatus 50, the zoom position can be changed bit by bit at the time of the start of the zoom operation. When the push operation is continued after the time Ta, the zoom position can be changed at high speed. Therefore, in the case where a desired zoom position is distant from the current zoom position, the zoom position can be efficiently changed to a desired position.

Additionally, the imaging apparatus 20 does not apply only to the case where the zoom position is changed at a preset zoom position change speed, the imaging apparatus 20 may change the zoom position at a zoom position change speed specified from the information processing apparatus 50. For example, in the case where the zoom position change speed is indicated by the zoom control signal from the information processing apparatus 50, zoom drive control is performed such that the zoom position is changed at that zoom position change speed. Further, the imaging apparatus 20 may change the zoom position to a target zoom position specified from the information processing apparatus 50 at a preset zoom position change speed or a zoom position change speed specified from the information processing apparatus 50. For example, in the case where the target zoom position is indicated by the zoom control signal from the information processing apparatus 50, zoom drive control is performed such that the zoom position is changed to the target zoom position. If such a zoom behavior is performed, diverse zoom behaviors are enabled and the operability can be improved.

### [3-2. Another Behavior of Information Processing Apparatus]

In the information processing apparatus described above, an instruction to specify the single-step mode or to start and stop the zoom drive control is performed in accordance with the operation of the zoom button. However, the information processing apparatus may perform the zoom drive control of the imaging apparatus 20 in accordance with another user operation, e.g., the pinch operation, in addition to the zoom button operation.

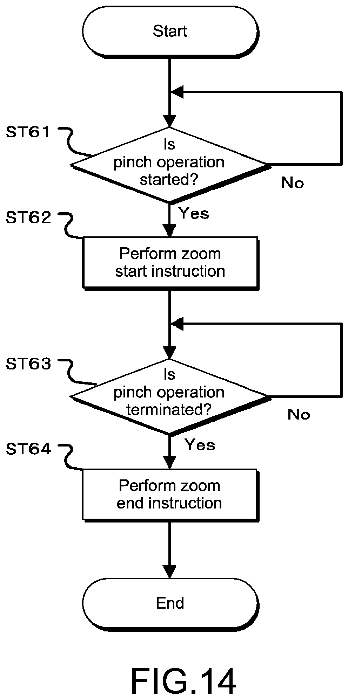

Fig. 14 is a flowchart showing a behavior of a case where the zoom drive control is performed in accordance with an operation time of a pinch operation performed in the operation input unit of the information processing apparatus.

In Step ST61, the control unit 70 determines whether a pinch operation is started or not. When determining that the pinch operation is started on the basis of the operation signal from the operation input unit 68, the control unit 70 proceeds to Step ST62, and if not, returns back to Step ST61.

In Step ST62, the control unit 70 performs a zoom start instruction. The control unit 70 determines which of a pinch-in and a pinch-out of the pinch operation is operated, and generates a zoom control signal for starting a change of the zoom position to a zoom direction based on a determination result. For example, in the case where an operation direction is a pinch-in, the zoom position is changed to the wide-angle side such that a captured image of a wider range of the angle of view can be obtained. Further, in the case where the operation direction is a pinch-out, the zoom position is changed to the telephoto side such that an enlarged image of a desired subject can be obtained. The control unit 70 outputs the generated zoom control signal to the Wi-Fi communication unit 613 of the wireless communication unit 61, transmits the generated zoom control signal from the Wi-Fi antenna 614 to the imaging apparatus 20, and proceeds to Step ST63.

In Step ST63, the control unit 70 determines whether the pinch operation is terminated or not. When determining that the pinch operation is terminated on the basis of the operation signal from the operation input unit 68, the control unit 70 proceeds to Step ST64, and if not, returns back to Step ST63.

In Step ST64, the control unit 70 performs a zoom end instruction. The control unit 70 generates a zoom control signal for terminating the change of the zoom position. The control unit 70 outputs the generated zoom control signal to the Wi-Fi communication unit 613 of the wireless communication unit 61, transmits the generated zoom control signal from the Wi-Fi antenna 614 to the imaging apparatus 20, and terminates the processing.

If such processing is performed, in the information processing apparatus 50, the zoom position of the imaging apparatus 20 can also be changed by the pinch operation, in addition to the zoom button operation. Additionally, in the processing shown in Fig. 14, if the pinch operation is performed slower and the operation period is made longer when a movement amount of a pinch operation position is equal, the zoom position change period becomes longer and the change amount of the zoom position can be increased.

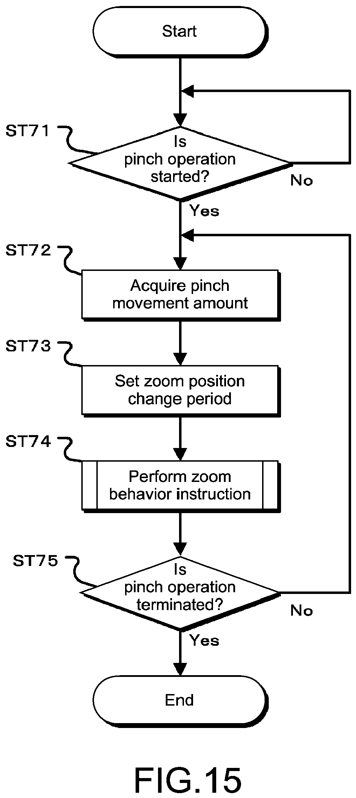

Next, Fig. 15 is a flowchart showing a behavior of a case where the zoom drive control is performed in accordance with the movement amount of the pinch operation position performed in the operation input unit 68 of the information processing apparatus 50.

In Step ST71, the control unit 70 determines whether a pinch operation is started or not. When determining that the pinch operation is started on the basis of the operation signal from the operation input unit 68, the control unit 70 proceeds to Step ST72, and if not, returns back to Step ST71.

In Step ST72, the control unit 70 acquires a movement amount of a pinch operation position (hereinafter, called "pinch movement amount"). The control unit 70 acquires a pinch movement amount in a predetermined time on the basis of the operation signal from the operation input unit 68, and proceeds to Step ST73.

In Step ST73, the control unit 70 sets a zoom position change period in accordance with the pinch movement amount. The control unit 70 sets the zoom position change period in accordance with the pinch movement amount such that the zoom position change period is made longer as the pinch movement amount is increased, for example, and proceeds to Step ST74.

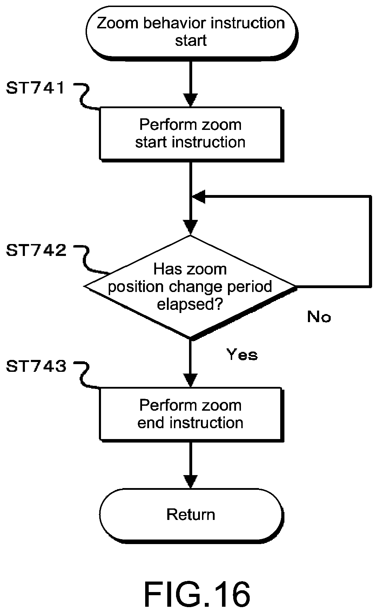

In Step ST74, the control unit 70 performs a zoom behavior instruction. Fig. 16 is a flowchart showing a zoom behavior instruction. In Step ST741, the control unit 70 performs a zoom start instruction. The control unit 70 determines which of a pinch-in and a pinch-out of the pinch operation is operated, and generates a zoom control signal for starting a change of the zoom position to a zoom direction based on a determination result. For example, in the case where an operation direction is a pinch-in, the zoom position is changed to the wide-angle side such that a captured image of a wider range of the angle of view can be obtained. Further, in the case where the operation direction is a pinch-out, the zoom position is changed to the telephoto side such that an enlarged image of a desired subject can be obtained. The control unit 70 outputs the generated zoom control signal to the Wi-Fi communication unit 613 of the wireless communication unit 61, transmits the generated zoom control signal from the Wi-Fi antenna 614 to the imaging apparatus 20, and proceeds to Step ST742.

In Step ST742, the control unit 70 determines whether the zoom position change period has elapsed or not. In the case where the zoom position change period set in Step ST73 has not elapsed, the control unit 70 returns back to Step ST742, and in the case where the zoom position change period has elapsed, proceeds to Step ST743.

In Step ST743, the control unit 70 performs a zoom end instruction. The control unit 70 generates a zoom control signal for terminating a change of the zoom position. The control unit 70 outputs the generated zoom control signal to the Wi-Fi communication unit 613 of the wireless communication unit 61, transmits the generated zoom control signal from the Wi-Fi antenna 614 to the imaging apparatus 20, and terminates the zoom behavior instruction.

When terminating the zoom behavior instruction of Step ST74 and proceeding to Step ST75, the control unit 70 determines whether the pinch operation is terminated or not. When determining that the pinch operation is not terminated on the basis of the operation signal from the operation input unit 68, the control unit 70 returns back to Step ST72, and when determining that the pinch operation is terminated, the control unit 70 terminates the processing.

If such processing is performed, in the information processing apparatus 50, the zoom position of the imaging apparatus 20 can also be changed by the pinch operation, in addition to the zoom button operation. Further, since the zoom position change period is set in accordance with the pinch movement amount, by adjustment of the pinch movement amount, the zoom position change period in the imaging apparatus 20 can be easily adjusted, with the result that the movement amount of the zoom can be easily adjusted.

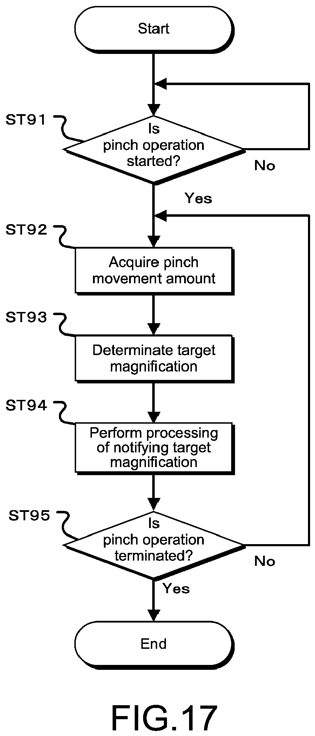

Next, Fig. 17 is a flowchart showing a behavior in the case where zoom drive control is performed in accordance with a pinch movement amount of a pinch operation performed in the operation input unit 68 of the information processing apparatus 50 and a current zoom magnification (zoom position).

In Step ST91, the control unit 70 determines whether a pinch operation is started or not. When determining that the pinch operation is started on the basis of the operation signal from the operation input unit 68, the control unit 70 proceeds to Step ST92, and if not, returns back to Step ST91.

In Step ST92, the control unit 70 acquires a pinch movement amount. The control unit 70 acquires a movement amount in a predetermined time on the basis of the operation signal from the operation input unit 68 and proceeds to Step ST93.

In Step ST93, the control unit 70 determines a target magnification (target zoom position). The control unit 70 calculates a target magnification on the basis of the pinch movement amount acquired in Step ST92 and the current zoom position (current magnification) notified from the imaging apparatus 20 and proceeds to Step ST94. For example, in the case where an operation direction is a pinch-in, the control unit 70 determines a target magnification on the basis of the pinch movement amount and the current magnification on the wide-angle side such that a captured image of a wider range of the angle of view can be obtained. Further, in the case where the operation direction is a pinch-out, the control unit 70 determines a target magnification on the basis of the pinch movement amount and the current magnification on the telephoto side such that an enlarged image of a desired subject can be obtained.

In Step ST94, the control unit 70 performs processing of notifying a target magnification. The control unit 70 generates a zoom control signal indicating the target magnification determined in Step ST93. The control unit 70 outputs the generated zoom control signal to the Wi-Fi communication unit 613 of the wireless communication unit 61, transmits the generated zoom control signal from the Wi-Fi antenna 614 to the imaging apparatus 20, and proceeds to Step ST95.

In Step ST95, the control unit 70 determines whether the pinch operation is terminated or not. The control unit 70 determines whether the pinch operation is terminated or not on the basis of the operation signal from the operation input unit 68. When not determining that the pinch operation is terminated, the control unit 70 returns back to Step ST92, and when determining that the pinch operation is terminated, terminates the processing.

If such processing is performed, in the information processing apparatus 50, the zoom position of the imaging apparatus 20 can also be changed by the pinch operation, in addition to the zoom button operation. Further, if the processing shown in Fig. 17 is performed, the zoom drive control can be performed such that a captured image of the target magnification can be obtained.

Additionally, the imaging apparatus 20 may change the zoom position at the zoom position change speed indicated from the information processing apparatus 50, in addition to the held information on a moving speed of the zoom position. Further, the zoom position change speed indicated from the information processing apparatus 50 may be faster than the zoom position change speed of the zoom behavior (zoom behavior of normal mode) based on the zoom operation of the operation input unit 44. In this case, the information processing apparatus 50 determines the zoom position change speed in accordance with the user operation and notifies the zoom position change speed to the imaging apparatus 20. For example, in the case where the zoom position change speed is determined in accordance with the pinch operation, the control unit 70 sets the zoom position change speed in accordance with the pinch movement amount in the predetermine time. Specifically, the control unit 70 sets the zoom position change speed to be faster as the pinch movement amount in the predetermine time increases. With this processing, the user can change the zoom position at a desired speed. Further, if the zoom position change speed is made faster than the zoom position change speed VA in the normal mode as the pinch movement amount in the predetermine time increases, the zoom position can be changed faster than the zoom button operation of the imaging apparatus 20. It should be noted that the change of the zoom position is performed in the imaging apparatus 20 at the zoom position change speed indicated from the information processing apparatus 50, the imaging apparatus 20 may not hold the information on the zoom position change speed in the zoom behavior based on the zoom control signal from the information processing apparatus 50.

A series of processing described herein can be executed by hardware, software, or a combined configuration of both of hardware and software. In the case where processing by software is executed, a program recording a processing sequence is installed in a memory of a computer incorporated in dedicated hardware and then executed. Alternatively, a program can be installed in a general-purpose computer that can execute various types of processing, and then executed.

For example, the program can be previously stored in a hard disk, an SSD (Solid State Drive), or a ROM (Read Only Memory) serving as a storage medium. Alternatively, a removable recording medium such as a flexible disc, a CD-ROM (Compact Disc Read Only Memory), an MO (Magneto optical) disc, a DVD (Digital Versatile Disc), a BD (Blu-Ray Disc (registered trademark)), a magnetic disc, or a semiconductor memory card is used as a storage medium, and thus the program can be stored (recorded) temporarily or enduringly. Such a removable recording medium can be provided as so-called package software.

Further, the program may be installed in a computer from a removable recording medium, and also transferred from a download site to a computer via a network such as a LAN (Local Area Network) or the Internet in a wireless or wired manner. The computer can receive the program thus transferred and can install the program in a storage medium such as a built-in hard disk.

It should be noted that the present technology should not be construed to be limited to the above-mentioned embodiment of the technology. The embodiment of the present technology discloses the present technology in the form of exemplification, and it is clear that a person having ordinary skill in the art can make modification and substitution of the embodiment without departing from the gist of the present technology. In other words, in order to determine the gist of the present invention, the reference should be made to the claims.

Additionally, the lens control apparatus of the present technology can have the following configurations.
(1) A lens control apparatus, including:
   an operation input unit that receives a user operation;
   a communication unit that performs communication with an external apparatus; and
   a control unit that performs drive control of a zoom lens in accordance with a zoom operation received at the operation input unit or a zoom control signal received at the communication unit and sets a different zoom position change speed between drive control corresponding to the zoom operation and drive control corresponding to the zoom control signal.
(2) The lens control apparatus according to (1), in which
   the control unit sets a zoom position change speed in the drive control corresponding to the zoom control signal to be slower than in the drive control corresponding to the zoom operation.
(3) The lens control apparatus according to (2), in which
   the control unit starts the drive control of the zoom lens with the zoom position change speed in the drive control corresponding to the zoom control signal being set to be slower than in the drive control corresponding to the zoom operation, and then sets the zoom position change speed to a zoom position change speed in the drive control corresponding to the zoom operation.
(4) The lens control apparatus according to any one of (1) to (3), in which
   the control unit performs the drive control only for a preset period, when the zoom control signal indicates that a zoom operation shorter than a predetermined period is performed in the external apparatus.
(5) The lens control apparatus according to any one of (1) to (4), in which
   the control unit changes a zoom position of the zoom lens to a target zoom position indicated by the zoom control signal.
(6) The lens control apparatus according to any one of (1) to (5), in which
   the control unit changes a zoom position of the zoom lens at a zoom position change speed indicated by the zoom control signal.
(7) The lens control apparatus according to any one of (1) to (6), in which
   the communication unit transmits information indicating a zoom position of the zoom lens to the external apparatus.
(8) The lens control apparatus according to any one of (1) to (7), in which
   the communication unit performs wireless communication with the external apparatus.

### Industrial Applicability

In the lens control apparatus, the imaging apparatus, the information processing apparatus, the imaging system, the method, and the program of the present technology, the drive control of the zoom lens is performed in accordance with the zoom operation received at the operation input unit or the zoom control signal received at the communication unit, and the different zoom position change speed is set between the drive control corresponding to the zoom operation and the drive control corresponding to the zoom control signal. Thus, the zoom position change speed is switched between a speed adequate to the zoom operation received at the operation input unit and a speed adequate to the zoom control signal, i.e., the zoom operation performed in the external apparatus. Therefore, even when the zoom operation is performed in any of the imaging apparatus and the external apparatus, a zoom behavior with good operability can be performed, which is suitable for an imaging apparatus capable of a remote operation, for example.

### Description of Symbols

- 10: imaging system
- 20: imaging apparatus
- 21: outer barrel
- 22: control ring
- 25: rear panel
- 26: coupling part
- 27: lock pin
- 31: imaging optical system block
- 32: imaging unit
- 33: image processing unit
- 34, 64: recording and reproducing unit
- 35, 67: display unit
- 36,: 65 power supply unit
- 37: time management unit
- 38,: 63 storage unit
- 39: posture detection unit
- 41, 61: wireless communication unit
- 44, 68: operation input unit
- 45: camera control unit
- 46, 71: recording medium
- 50: information processing apparatus
- 51: outer casing
- 52: display panel
- 62: sound input and output unit
- 68: operation input unit
- 70: control unit
- 80: adaptor
- 81: casing
- 82: attached body
- 83: grip part
- 84: holding protrusion
- 85: first facing surface
- 86: second facing surface
- 411, 611: NFC unit
- 412, 612: NFC antenna
- 413, 613: Wi-Fi communication unit
- 414, 614: Wi-Fi antenna
- 441: zoom button
- 442: shutter button

### Clauses

[1] A lens control apparatus, comprising:
   an operation input unit that receives a user operation;
   a communication unit that performs communication with an external apparatus; and
   a control unit that performs drive control of a zoom lens in accordance with a zoom operation received at the operation input unit or a zoom control signal received at the communication unit and sets a different zoom position change speed between drive control corresponding to the zoom operation and drive control corresponding to the zoom control signal.
[2] The lens control apparatus according to clause 1, wherein
   the control unit sets a zoom position change speed in the drive control corresponding to the zoom control signal to be slower than in the drive control corresponding to the zoom operation.
[3] The lens control apparatus according to clause 2, wherein
   the control unit starts the drive control of the zoom lens with the zoom position change speed in the drive control corresponding to the zoom control signal being set to be slower than in the drive control corresponding to the zoom operation, and then sets the zoom position change speed to a zoom position change speed in the drive control corresponding to the zoom operation.
[4] The lens control apparatus according to clause 1, wherein
   the control unit performs the drive control only for a preset period, when the zoom control signal indicates that a zoom operation shorter than a predetermined period is performed in the external apparatus.
[5] The lens control apparatus according to clause 1, wherein
   the control unit changes a zoom position of the zoom lens to a target zoom position indicated by the zoom control signal.
[6] The lens control apparatus according to clause 1, wherein
   the control unit changes a zoom position of the zoom lens at a zoom position change speed indicated by the zoom control signal.
[7] The lens control apparatus according to clause 1, wherein
   the communication unit transmits information indicating a zoom position of the zoom lens to the external apparatus.
[8] A lens control method, comprising the steps of:
   performing, by a communication unit, communication with an external apparatus; and
   performing, by a control unit, drive control of a zoom lens in accordance with a zoom operation received at an operation input unit or a zoom control signal received at the communication unit and setting a different zoom position change speed between drive control corresponding to the zoom operation and drive control corresponding to the zoom control signal.
[9] A computer-readable storage medium storing a program causing a computer performing drive control of a zoom lens to execute:
   a procedure of performing communication with an external apparatus via a communication unit; and
   a procedure of performing the drive control of the zoom lens in accordance with a zoom operation received at an operation input unit or a zoom control signal received from the external apparatus via the communication unit and setting a different zoom position change speed between drive control corresponding to the zoom operation and drive control corresponding to the zoom control signal.
[10] An imaging apparatus, comprising:
   an imaging optical system that includes a zoom lens;
   an operation input unit that receives a user operation;
   a communication unit that performs communication with an external apparatus; and
   a control unit that performs drive control of the zoom lens in accordance with a zoom operation in the operation input unit or a zoom control signal received at the communication unit and sets a different zoom position change speed between drive control corresponding to the zoom operation and drive control corresponding to the zoom control signal.
[11] An information processing apparatus, comprising:
   a communication unit that performs communication with an imaging apparatus;
   an operation input unit that receives a user operation; and
   a control unit that generates a zoom control signal for controlling a zoom behavior in the imaging apparatus in accordance with at least any of an operation position of a zoom operation in the operation input unit, an operation period, and a movement amount of the operation position and outputs the zoom control signal to the imaging apparatus via the communication unit.
[12] The information processing apparatus according to clause 11, wherein
   the control unit sets a zoom position change period of the zoom behavior in the imaging apparatus in accordance with the movement amount of the operation position.
[13] An information processing method, comprising the steps of:
   performing, by a communication unit, communication with an imaging apparatus; and
   generating, by a control unit, a zoom control signal for controlling a zoom behavior in the imaging apparatus in accordance with at least any of an operation position of a zoom operation received at an operation input unit, an operation period, and a movement amount of the operation position and outputting the zoom control signal to the imaging apparatus via the communication unit.
[14] A computer-readable storage medium storing a program causing a computer performing drive control of a zoom lens provided to an imaging apparatus to execute:
   a procedure of performing communication with the imaging apparatus via a communication unit; and
   a procedure of generating a zoom control signal for controlling a zoom behavior in the imaging apparatus in accordance with a zoom operation received at an operation input unit and outputting the zoom control signal to the imaging apparatus via the communication unit,
   the program setting a different zoom position change speed between drive control of a zoom behavior corresponding to a zoom operation by an operation input unit of the imaging apparatus and drive control of a zoom behavior corresponding to the zoom control signal.
[15] An imaging system, comprising:
   an imaging apparatus; and
   an information processing apparatus,
   the imaging apparatus including
      an imaging optical system that includes a zoom lens,
      an operation input unit that receives a user operation,
      a communication unit that performs communication with the information processing apparatus, and
      a control unit that performs drive control of the zoom lens in accordance with a zoom operation in the operation input unit or a zoom control signal received at the communication unit,
   the information processing apparatus including
      a communication unit that performs communication with the imaging apparatus,
      an operation input unit that receives a user operation, and
      a control unit that generates a zoom control signal for controlling a zoom behavior in the imaging apparatus in accordance with a zoom operation in the operation input unit and outputs the zoom control signal to the imaging apparatus via the communication unit,
   a different zoom position change speed being set between drive control corresponding to the zoom operation in the control unit of the imaging apparatus and drive control corresponding to the zoom control signal.

## Claims

1. A method, comprising:
communicating with an imaging device;
outputting a zoom control signal to the imaging device;
wherein the zoom control signal is a signal for controlling the zoom of the imaging device based on one of a plurality of zoom control modes, and whereby the plurality of zoom control modes includes the zoom control mode for controlling the zoom of the imaging device at a speed slower than a normal zoom change speed by an operation input unit provided in the imaging apparatus.

2. A method according to claim 1, wherein the plurality of zoom control modes include a mode for controlling the zoom behaviour of the imaging device based on the zoom change speed set by user selection.

3. A method according to either one of claims 1 or 2, comprising:
outputting an information indicating the zoom magnification of the imaging apparatus to a display unit.

4. A method according to claim 3, wherein the information is a zoom bar.

5. An information processing apparatus (50), comprising a control unit (70) and a communication unit (61) wherein the control unit (70) is configured to control the communication unit (61) to: communicate with an imaging device; and
output a zoom control signal to the imaging device;
wherein the zoom control signal is a signal for controlling the zoom of the imaging device based on one of a plurality of zoom control modes, and whereby the plurality of zoom control modes includes the zoom control mode for controlling the zoom of the imaging device at a speed slower than a normal zoom change speed by an operation input unit provided in the imaging apparatus.

6. An information processing apparatus (50) according to claim 5, wherein the plurality of zoom control modes include a mode for controlling the zoom behaviour of the imaging device based on the zoom change speed set by user selection.

7. An information processing apparatus (50) according to either one of claims 5 or 6, comprising a display unit (67), wherein the control unit (70) is configured to control the communication unit (61) to:
output an information indicating the zoom magnification of the imaging apparatus to the display unit.

8. An information processing apparatus according to claim 7, wherein the information is a zoom bar.

9. An information processing apparatus according to any one of claims 5 to 8, wherein the information processing apparatus is a smartphone.

10. A computer program comprising computer readable instructions, which, when loaded onto a computer, configures the computer to perform a method according to any one of claims 1 to 4.

11. A computer readable storage medium configured to store the computer program of claim 10 therein or thereon.
